# EUROPEAN PATENT APPLICATION

(11) **EP 1 550 970 A1**
(43) Date of publication of application: **06.07.2005**
(21) Application number: 04256950.9
(22) Date of filing: 10.11.2004
(51) Int. Cl.: G06F 17/60

(54) **Using a customer's purchasing intent in recommending alternative items for purchase in a physical store**

(30) Priority: 31.12.2003 US 750151
(71) Applicant: NCR International, Inc., Dayton, Ohio 45479 (US)
(72) Inventor: Gold, Kevin K., San Diego CA 92198 (US); Reed, Michael L., San Diego CA 92120 (US); Vandervort, Frank Roderic, Ramona CA 92065 (US); Walter, Todd A., Poway CA (US)
(74) Representative: Williamson, Brian

(57) **Abstract**

A merchant who operates a physical store is able to communicate a message to a customer who is carrying one or more items for purchase. While the customer is moving through the store, the merchant uses electronic means to gather data identifying at least one of the items carried by the customer. A computer-implemented program applied to the data analyzes the data and identifies at least one alternative item that the customer might want to buy. The program then prepares a message about the alternative item and delivers the message to the customer while the customer is still in the store.

## Description

The growing field of market-basket analysis allows retail merchants to better understand the desires and habits of their customer bases by analyzing the characteristics of individual customer purchases. By understanding the subtle patterns of multiple-item purchases and customer shopping behavior, a merchant can fine-tune its marketing activities and generate effective incentives to increase sales.

Market-basket analysis takes place both in physical stores, through the analysis of items placed in a physical shopping cart or basket, and in virtual stores, where electronic shopping carts keep track of items purchased in online transactions. In either case, the basket analysis does not occur until after the shopping "trip" is complete - after the purchase has been made and the customer has moved on to other things.

Typically, the merchant gathers data, including market-basket data, from its entire enterprise throughout each day and consolidates this data for analysis at the end of the day. The merchant uses the results of this analysis to enhance marketing strategies at later times (*e.g.*, the next day, quarter, or year). A customer's purchasing behavior on each trip, therefore, impacts the merchant's marketing strategy, and thus the customer's shopping experience, during *subsequent* visits.

As technology continues to advance, the merchant is able to gather greater amounts of data with shorter time lags. For example, at one time inventory data might have been gathered manually only on a quarterly basis. Today, electronic processing allows real-time or near-real-time inventory analysis. Inventory analysis continues to evolve with the advent of technologies such as wireless chips, which are now being fitted to pieces of merchandise for identification and data-collecting purposes. Technology such as this makes it possible for the merchant to track in real-time the precise location of every piece of merchandise.

Retail shopping is an interactive process where a customer might enter a store for various reasons: (1) To fulfill a requirement to purchase specific items; (2) to respond to specific incentives offered by a merchant; (3) to browse through the available merchandise. Merchants have long understood that it is to their advantage to identify individual customers and understand what drives the customer's purchasing decisions. To gauge a customer's future behavior, the merchant analyzes the past behaviors of that and other customers.

In an attempt to stimulate additional sales, merchants often create buying incentives for customers, such as incentives to make concurrent purchases of multiple items or particular combinations of items. Incentives that merchants frequently use include discounts, free shipping, and targeted suggestions of other items likely to interest the customer. Merchants typically consider a wide range of factors in deciding which incentives to offer, including things such as the customer's purchase history, the merchant's current inventory levels, and the styles and traditions of the season. Because merchants have traditionally been able to view only data gathered before a customer's current shopping trip, their buying incentives do not take into account any dynamic factors that might be influencing the customer during the current trip.

A merchant who operates a physical store is able to communicate a message to a customer who is carrying one or more items for purchase. While the customer is moving through the store, the merchant uses electronic means to gather data identifying at least one of the items carried by the customer. A computer-implemented program applied to the data analyzes the data and identifies at least one alternative item that the customer might want to buy. The program then prepares a message about the alternative item and delivers the message to the customer while the customer is still in the store.

An embodiment of the present invention will now be described, by way of example, with reference to the accompanying drawings, in which;
FIG. 1 is a schematic diagram of a shopping basket in a physical retail store and a system that identifies in real-time the contents of the basket;
FIG. 2 is a schematic diagram of a system that identifies in real-time the contents of a virtual shopping cart in an online retail store;
FIG. 3 is a flow chart of a technique for use in analyzing the current contents of a customer's shopping basket and delivering a purchase incentive to the customer while the customer is still shopping;
FIG. 4 is a schematic diagram of a computer system; and
FIG. 5 is a schematic diagram of a database system.

Described below is a system that allows a retail merchant, both in a brick-and-mortar store and in an online store, to consider the current buying interests of a customer in deciding which offers, if any, to extend to the customer. The merchant is able to view the current contents of the customer's "shopping basket" and analyze these contents in conjunction with information about both that customer's and other customers' previous buying habits. This allows the merchant to recognize and then deliver offers that are meaningful to the customer on that particular trip, which may or may not be similar to, or motivated by similar reasons as, the customer's previous trips. The merchant is therefore able to market in real-time, and thus more directly and more meaningfully, to each customer, which leads to increased sales for the merchant and a more pleasant and productive buying experience for the customer.

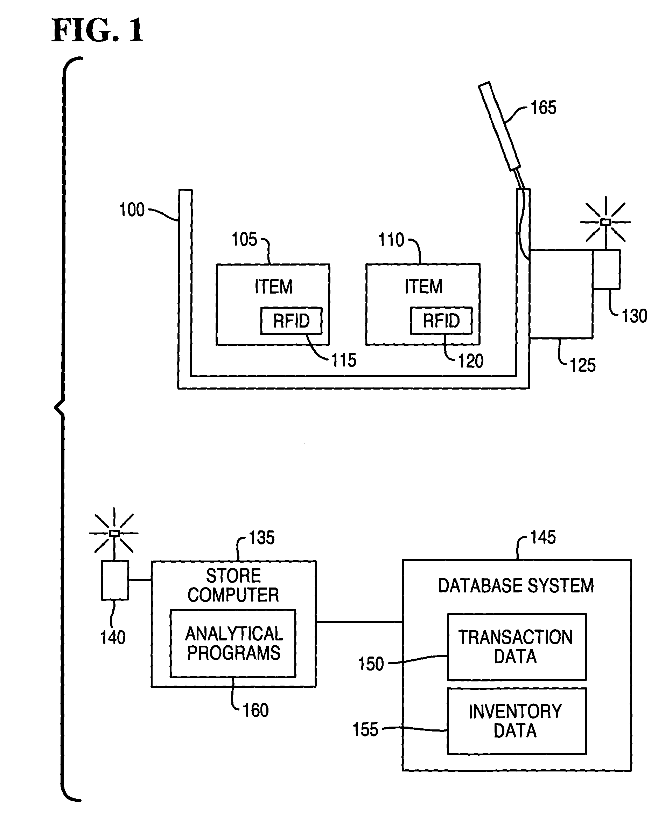

FIG. 1 shows a physical cart or basket 100 that a customer uses to carry items 105, 110 for purchase during a visit to a brick-and-mortar store. Each of the items 105, 110 includes a mechanism, such as a radio-frequency identification (RFID) tag 115, 120, that allows the merchant owning the items to identify and locate the items in real-time while they are in the store. A special-purpose computer system (or "basket computer") 125 and corresponding radio frequency (RF) transceiver 130 mounted to the shopping basket 100 receive and process signals from the RFID tags 115, 120 on the items 105, 110. In this manner, the basket computer 125 is able to identify every item that the customer is carrying through the store.

The basket computer 125 also generates and sends signals of its own. These signals serve to notify a centrally located computer system (or "store computer") 135, which is also coupled to a radio-frequency (RF) transceiver 140, of the items that are present within the basket 100. The signals from the basket computer 125 also identify the basket 100 itself, so that the central computer can create and maintain in real-time a list of the items carried in each basket in the store. The basket computer 125 also connects to a display monitor 165, which in some systems also doubles as an input device, such as a touch screen or a card reader. The function of the display monitor 165 is described in detail below.

The store computer 135 connects to a central database system 145 that stores some or all of the merchant's business related data, including operational data that contains information about all aspects of the merchant's business operations. Among the operational data stored in the database system 145 are historical transaction data 150, which preserves information about the historical purchases of all of the merchant's customers, and inventory-management data 155, which allows the merchant to monitor and manage the store's product supplies.

The data stored in the database system 145 often includes information about the specific costs, prices, and profit margins of products in the store; marketing incentives available for offer to customers; customer value ratings based on predefined scoring algorithms; and, in some cases, shopping lists or wish lists provided by the customer directly or by some other person (such as a spouse) for whom the customer might be shopping. The inventory-management data 155 often includes information not only about the current inventory levels of the various products offered by the merchant, but also about incoming shipments and supply-chain gluts or shortages.

In some cases, the database system 145 also includes or has access to (*e.g.*, though a computer network, such as the Internet) a variety of other types of information, including environmental information such as weather reports and seasonal descriptions. Other types of information that are often stored in the database or retrieved by the store computer include information about store location, fashion trends, upcoming holidays, and recipes. The merchant is able to draw upon all types of operational and non-operational data in analyzing the customer's purchasing behavior and in generating offers intended to influence that behavior.

The store computer 135 includes one or more analytical programs 160 that are designed to retrieve data from the database system 145 and analyze this data in generating offers tailored to specific customers. Analytical programs 160 are available as standard, off-the-shelf products that perform identical functions for all merchants who use them, as well as custom-built programs that provide individualized services ordered specially by the merchant. In general, input to the analytical programs 160 is derived both from the data stored in the database system 145 and from the information provided by the basket computer, and output from the programs comes in the form of buying incentives (such as coupons or offers for free or discounted items) or recommendations to purchase certain items not currently found in the customer's basket (such as products that complement the items in the basket or that are needed to complete the ingredient list of a particular recipe). As described below, the analytical programs 160 score the current contents of the customer's basket against both general and customer-specific historical purchase data and identify additional products that the customer might have an interest in buying. The analytical programs 160 are also often used to analyze the merchant's current inventory levels and consider other factors (*e.g.*, weather, upcoming holidays) that might impact the customer's buying behavior.

Marketing offers and purchasing suggestions are delivered to the customer through the display monitor 165 mounted to the shopping basket 100. The display monitor 165 is connected to the basket computer 125 through some electrical or electronic means, such as an electrical cable 170 or an infrared (IR) or RF wireless connection. The basket computer 125 receives messages from the store computer 135 containing information, such as buying incentives or announcements, that the merchant wants to deliver to the customer. The basket computer 125 delivers this information to the display monitor 165, which in turn displays it to the customer.

In some systems the customer is able to interact with the merchant through the basket and store computers. For example, some merchants might choose to equip the display monitors with touch-screen capabilities so that the customer can reply to the merchant's offers or provide feedback or additional information to the merchant. In these situations, the display monitor or other input device delivers information from the customer to the basket computer 125, which passes the information on to the store computer 135. The merchant might also choose to equip the display monitor or the basket itself with other input devices, such as a card reader for use with a preferred-customer card or a credit card, or a storage-disk or memory card reader through which the customer can upload information (such as a shopping list or wish list) to the merchant. Input devices such as these not only allow the customer to interact with the merchant while shopping, but also make it easier for the merchant to identify the customer. When the merchant knows not only what the customer is carrying, but also who the customer is, the merchant is able to create a highly customized shopping experience for the customer. Personalizing the shopping experience in this manner allows the merchant to consider historical data that reflects the customer's previous purchases from the merchant and thus to make even smarter and more effective decisions when assessing how to deal with the customer during the current shopping visit.

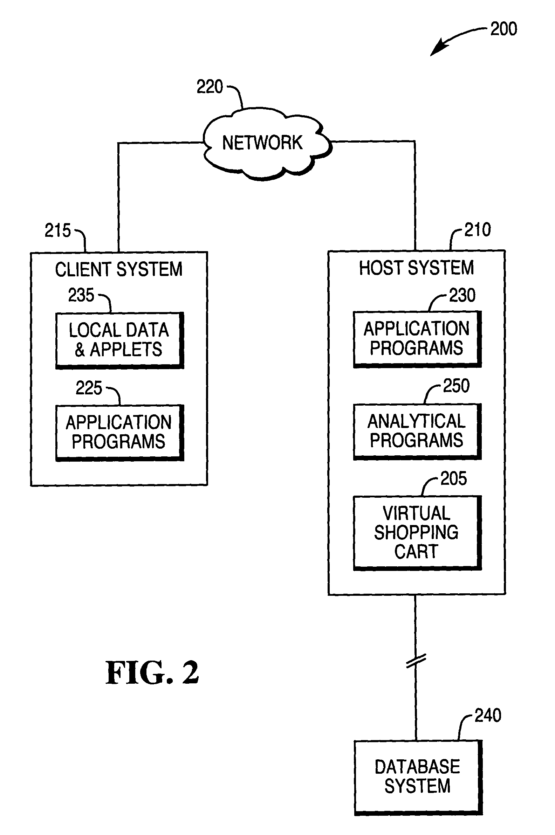

FIG. 2 shows a system 200 that allows an online retail merchant to implement a purchasing-incentive plan like that described above. In this embodiment, the shopping basket is a virtual shopping cart 205 stored on a host computer system 210 that is maintained by the merchant. The customer shops the online merchant's store through a client computer system 215 that connects to the host computer system 210 through a computer network 220, such as the Internet. One or more application programs 225 in the client system 215, such as an Internet browser program, interact with application programs 230 in the host system 210 to create an online session for the customer in the merchant's store. Local data and applets 235 stored on the client system by the host system simplify the exchange of information between the customer and merchant and make it very easy to identify specific customer preferences. The password log-in process required by most online merchants is sufficient to identify the customer and any accounts associated with the customer.

As with the brick-and-mortar merchant, the online merchant maintains a database system 240 that stores all sorts of business related data, including operational and non-operational data like that described above. Analytical programs 250 in the host system 210 operate on this data to analyze customer habits and preferences and to generate buying incentives, including product offers and purchasing recommendations, for the customer. The analytical programs take into account not only historical data about the purchases of the specific customer and the merchant's other customers, but also information about the items currently residing in the customer's online shopping cart. The programs score the current contents of the customer's online shopping cart against the historical purchase data and identify additional products that the customer might have an interest in buying. The host system 210 delivers information about these products, along with appropriate offers or messages to entice the purchase of these products, to the client system 215 via the network 220.

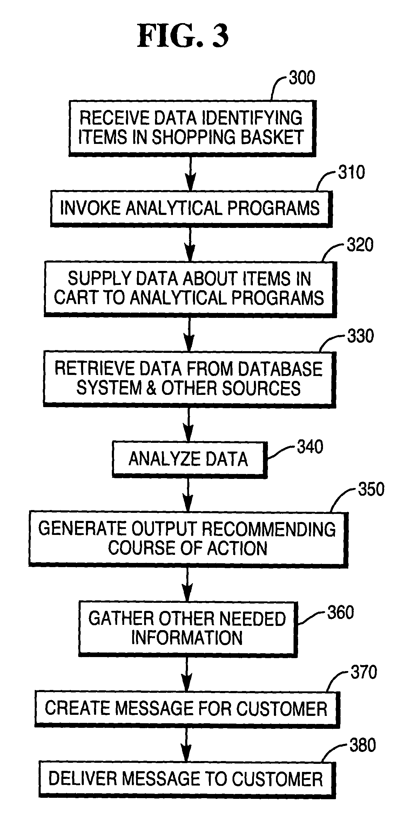

FIG. 3 illustrates a technique for use in the merchant's computer system in analyzing a customer's market basket and delivering custom-tailored buying incentives to that customer while the customer is still shopping the merchant's store. The system first receives information identifying the items currently residing in the customer's shopping basket (step 300). The system then invokes the analytical programs that will analyze the shopping basket against the wide variety of data stored within or available through the database system (step 310). The system then supplies the data about the items in the customer's basket to the analytical programs (step 320). Under control of the analytical programs, the system also retrieves from the database system or from other sources (such as the Internet) all of the data necessary to carry out the requested analysis (step 330). For example, if the merchant wanted to identify the items most frequently purchased at the same time as the types of items that are currently in the customer's basket, the analytical program would instruct the system to retrieve from the database historical information about transactions in which those types of items were purchased. Or, if the analytical program were to recognize that under certain weather conditions the purchase of a type of item currently in the customer's basket typically came with the purchase of another type of item, the program might instruct the system to retrieve information about the current weather conditions where the customer is located. The data retrieved from the database system also often includes information about the types of offers the merchant is willing to make and to which types of customers it is willing to make them.

On receiving the necessary data from the database system and other sources, the analytical program analyzes the data (step 340) and generates output (350) that suggests a course of action for the merchant. This output typically comes in the form of a list of products that the customer might be interested in buying and one or more incentives that might entice the customer to buy them. On receiving this list, the system gathers any additional information that it might need on the items (*e.g.*, product descriptions, suggested retail prices) (step 360) and then puts together a message to deliver to the customer (step 370). When the message is constructed, the system delivers the message to the display monitor on the physical shopping basket or to the customer's computer system in the online-store environment (step 380).

### Example A

A customer enters a store and places a package of hot dogs, hot dog buns, and a bottle of soda in a basket. At this moment the merchant has an excess inventory of potato chips. Given the customer's intended purchases, the customer is likely to respond to an incentive to purchase potato chips. Historically, the merchant has not able to analyze the contents of the customer's basket until after the completion of the sale and thus has not able to give the customer an incentive to buy the chips during the current trip while the likelihood of purchase is high. With the system described here, the merchant sees in real-time the items that the customer has placed in the basket and can generate and deliver a reminder to buy potato chips and, if desired, a coupon good for a reduced price on the chips.

### Example B

A customer from Minnesota is shopping an online clothing merchant during mid-January in preparation for a trip to Hawai'i. The merchant's records show that this customer has previously purchased flannel shirts, parkas, ski masks, and other cold weather gear. Upon entering the online store, the customer is immediately presented with a 2-for-1 offer on woolen sweaters. However, the customer disregards this offer and instead places a swimsuit and a beach towel in the virtual shopping cart. Historically, the merchant would then present the customer with an offer for a discounted price on another cold-weather item, such as long underwear, which the customer again would ignore. The merchant would fail to note the customer's current behavior because the transaction for this particular shopping trip has not yet completed. With the system described above, however, the merchant's analytical programs would detect almost immediately that the customer is buying for a warmer climate and would generate purchases offers tailored to meet the customer's travel needs.

### Computer implementation

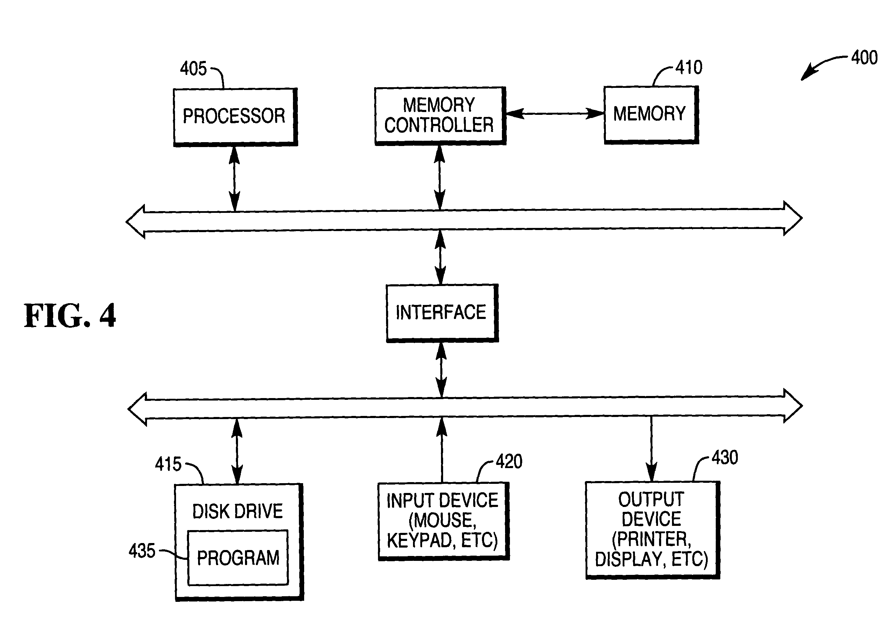

FIG. 4 shows a computer system 400 suited for use by the merchant in managing a dynamic incentive program like that described here. In general, the computer 400 includes one or more processors 405, one or more temporary data-storage components 410 (*e.g.*, volatile and nonvolatile memory modules), one or more persistent data-storage components 415 (*e.g.*, optical and magnetic storage devices, such as hard and floppy disk drives, CD-ROM drives, and magnetic tape drives), one or more input devices 420 (*e.g.*, mice, keyboards, and touch-screens), and one or more output devices 430 (e.g., display consoles and printers).

The computer 400 includes executable program code 435 that is usually stored in one of the persistent storage media 415 and then copied into memory 410 at run-time. The processor 405 executes the code by retrieving program instructions from memory in a prescribed order. When executing the program code, the computer receives data from the input and/or storage devices, performs operations on the data, and then delivers the resulting data to the output and/or storage devices. The analytical programs and application programs described above typically include this kind of code.

In some embodiments, the computer is a special-purpose computer that performs only certain, specialized functions. The basket computer described above is typically a special-purpose computer. In other embodiments, the computer is a general-purpose computer programmed to perform the functions needed by the merchant. The store computer and host computer systems described above are typically this type of computer.

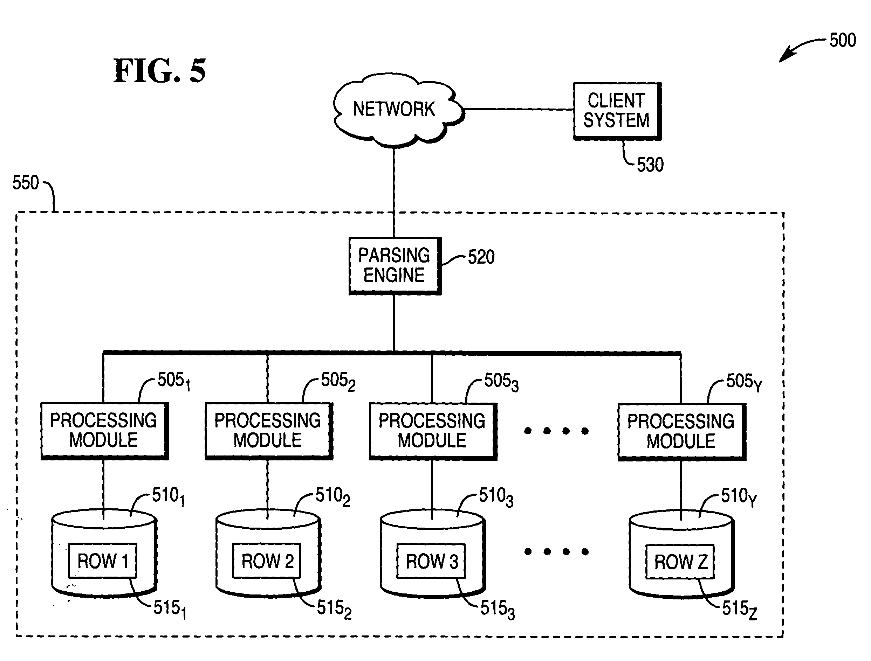

FIG. 5 shows a data-warehouse system 500 that is suited for use in providing the services described above. In this example, the data-warehouse 500 includes a relational database management system (RDBMS) built upon a massively parallel processing (MPP) platform. Other types of database systems, such as object-relational database management systems (ORDBMS) or those built on symmetric multi-processing (SMP) platforms, are also suited for use here.

As shown here, the data warehouse 500 includes one or more processing modules 505_{1...Y} that manage the storage and retrieval of data in data-storage facilities S10_{1...Y}. Each of the processing modules 505_{1...Y} manages a portion of a database that is stored in a corresponding one of the data-storage facilities 510_{1...Y}. Each of the data-storage facilities 510_{1...Y} includes one or more disk drives.

The system stores all sorts of business related data for the merchant, including the operational and non-operational data described above, in one or more tables in the data-storage facilities 510_{1...Y}. The rows 515_{1...Z} of the tables are stored across multiple data-storage facilities 510_{1...Y} to ensure that the system workload is distributed evenly across the processing modules 505_{1...Y}. A parsing engine 520 organizes the storage of data and the distribution of table rows 515_{1...Z} among the processing modules 505_{1...Y}. The parsing engine 520 also coordinates the retrieval of data from the data-storage facilities 510_{1...Y} in response to queries received from a user at a mainframe or a client computer 530. The data warehouse usually receives queries in a standard format, such as the Structured Query Language (SQL) put forth by the American National Standards Institute (ANSI).

The text above describes one or more specific embodiments of a broader invention. The invention also is carried out in a variety of alternative embodiments and thus is not limited to those described here. Many other embodiments are also within the scope of the following claims.

## Claims

1. A method for use in a physical store in communicating a message to a customer who is carrying one or more items for purchase, the method comprising:
using electronic means, while the customer is moving through the store, to gather data identifying at least one of the items carried by the customer;
applying a computer-implemented program to analyze the data and identify at least one alternative item that the customer might want to buy;
preparing a message about the alternative item; and
delivering the message to the customer while the customer is still in the store.

2. A method as claimed in claim 1, where using electronic means to gather data includes receiving a signal that originates with a device that is attached to one of the items carried by the customer.

3. A method as claimed in claim 2, where using electronic means to gather data includes receiving a signal from an RFID tag attached to the item.

4. A method as claimed in claim 1, where using electronic means to gather data includes receiving a signal from a transmitter located in a shopping basket that the customer is using to carry the items.

5. A method as claimed in any preceding claim, further comprising:
obtaining data about previous purchases made by one or more customers of the store; and
providing this data to the computer-implemented program for use in analyzing the data gathered from the items carried by the customer.

6. A method as claimed in claim 5, where obtaining data about previous purchases includes obtaining data about one or more previous purchases made by the customer to whom the message is being delivered.

7. A method as claimed in any preceding claim, further comprising:
obtaining data about an inventory level of at least one item in the store; and
providing this data to the computer-implemented program for use in analyzing the data gathered from the items carried by the customer.

8. A method as claimed in any preceding claim, further comprising:
obtaining data about at least one of the following things: weather in the area in which the store is located; an upcoming holiday; fashion trends; a recipe; a shopping list made by the customer; a wish list made by the customer; a wish list made by someone for whom the customer is shopping; and
providing this data to the computer-implemented program for use in analyzing the data gathered from the items carried by the customer.

9. A computer program, stored on a tangible storage medium, for use in a physical store in communicating a message to a customer who is carrying one or more items for purchase, the program comprising executable instructions that, when executed by a computer, cause the computer to:
receive, while the customer is moving through the store, data that identifies at least one of the items carried by the customer;
analyze the data and identify at least one alternative item that the customer might want to buy;
prepare a message about the alternative item; and
deliver the message to the customer while the customer is still in the store.

10. A method as claimed in claim 9, where, in receiving the data that identifies at least one of the items carried by the customer, the computer receives information derived from a signal that originates with a device that is attached to one of the items carried by the customer.

11. A program as claimed in claim 10, where, in receiving the data, the computer receives information derived from a signal that originates with an RFID tag attached to the item or
from a signal that originates with a transmitter located in a shopping basket that the customer is using to carry the items.

12. A program as claimed in claim 9, where the program also causes the computer to obtain data about previous purchases made by one or more customers of the store; and/or to obtain data about an inventory level of at least one item in the store.

13. A program of any of claims 9 to 12, where the program also causes the computer to:
obtain data about at least one of the following things: weather in the area in which the store is located; an upcoming holiday; fashion trends; a recipe; a shopping list made by the customer; a wish list made by the customer; a wish list made by someone for whom the customer is shopping; and
use this data in analyzing the data gathered from the items carried by the customer.

14. A system for use in a physical store in communicating a message to a customer who is carrying one or more items for purchase, the system comprising:
a data-gathering device configured to gather, while the customer is moving through the store, data identifying at least one of the items carried by the customer;
a computer system configured to:
analyze the data and identify at least one alternative item that the customer might want to buy; and
prepare a message about the alternative item; and
a message-delivery device configured to deliver the message to the customer while the customer is still in the store.

15. A system as claimed in claim 14, where the data-gathering device includes a device attached to one of the items carried by the customer an RFID tag attached to one of the items or a transmitter that delivers information to the computer system.

16. A system as claimed in claim 15, where the transmitter is located in a shopping basket that the customer is using to carry the items.

17. A system of any of claims 14 to 16, where the message-delivery device includes a display monitor.

18. A system as claimed in claim 17, where the display monitor is mounted to a shopping basket that the customer is using to carry the items.

19. A system as claimed in claim 17 or 18, where the display monitor includes an input mechanism that allows the customer to deliver input to the system.

20. A system as claimed in any of claims 14 to 19, where the computer system is configured to:
obtain data about previous purchases made by one or more customers of the store; and
use this data in analyzing the data gathered from the items carried by the customer.

21. A system as claimed in claim 20, where, in obtaining data about previous purchases, the computer system is configured to obtain data about one or more previous purchases made by the customer to whom the message is being delivered.

22. A system as claimed in any of claims 14 to 21, where the computer system is also configured to:
obtain data about an inventory level of at least one item in the store; and
use this data in analyzing the data gathered from the items carried by the customer.

23. A program as claimed in any of claims 14 to 22, where the computer system is also configured to:
obtain data about at least one of the following things: weather in the area in which the store is located; an upcoming holiday; fashion trends; a recipe; a shopping list made by the customer; a wish list made by the customer; a wish list made by someone for whom the customer is shopping; and
use this data in analyzing the data gathered from the items carried by the customer.
